# EUROPEAN PATENT APPLICATION

(11) **EP 4 811 243 A1**
(43) Date of publication of application: **23.09.2026**
(21) Application number: 26163434.9
(22) Date of filing: 10.03.2026
(51) Int. Cl.: G06Q 10/08, G06Q 10/083, G06Q 50/40, G07D 11/24, G07D 11/245, G07D 11/34, G07F 19/00

(54) **CASH TRANSPORT METHOD AND CASH TRANSPORT SYSTEM**

(30) Priority: 17.03.2025 JP 2025042320
(71) Applicant: GLORY LTD., Himeji-shi Hyogo 670-8567 (JP)
(72) Inventor: OOTA, Yoshikatsu, Hyogo, 670-8567 (JP); YANAGITA, Taishi, Hyogo, 670-8567 (JP); YOKOYAMA, Nao, Hyogo, 670-8567 (JP); HOJO, Tsuyoshi, Hyogo, 670-8567 (JP); NADA, Yoshiro, Hyogo, 670-8567 (JP)
(74) Representative: SSM Sandmair

(57) **Abstract**

A cash transport method performed by a management apparatus to optimize a quantity of cash stored in a cash handling apparatus, includes: determining whether cash transport for the cash handling apparatus is necessary; determining details of the cash transport including a denomination and a quantity of cash to be transported by the cash transport; acquiring, from each of a plurality of moving objects performing cash transport, position information and information on details of cash transport that can be handled by the moving object; and selecting, from among the plurality of moving objects, a moving object to head to an installation place of the cash handling apparatus to perform the cash transport, based on the installation place of the cash handling apparatus, the details of cash transport required for the cash handling apparatus, a current position of each moving object, and the details of cash transport that can be handled by each moving object.

## Description

### TECHNICAL FIELD

The present disclosure relates to a cash transport method and a cash transport system for optimizing the quantity of cash stored in a cash handling apparatus.

### BACKGROUND ART

In recent years, various cash handling apparatuses have been used. In order for a cash handling apparatus to continuously perform cash handling, the quantity of cash stored in the apparatus needs to be optimized to prevent a shortage of cash that leads to a situation where cash cannot be dispensed and an overflow of cash that leads to a situation where cash cannot be stored in the apparatus. U.S. Patent No. 10475295 discloses a system in which the inventory of cash stored in an automated teller machine (ATM) is managed to determine timing of cash transport for replenishing the ATM with cash and collecting cash from the ATM. Based on the quantity of cash in the ATM and a predetermined cash transport schedule, if it is predicted that cash transport will be required before the next scheduled transport, an unscheduled cash transport is added the cash transport schedule to prevent a situation where the ATM becomes unable to perform cash handling.

In the conventional art, the cash transport timing can be determined based on the inventory quantity of cash in the cash handling apparatus, but there have been cases where cash transport could not be performed efficiently. For example, even when a cash-in-transit vehicle is present near the installation site of a cash handling apparatus, another cash-in-transit vehicle may be dispatched from a predetermined base such as a cash center.

### SUMMARY

The present disclosure has been made in view of the problem, as well as other problems, of the conventional art, and the present disclosure addresses these issues, as discussed herein, with a cash transport method and a cash transport system capable of efficiently performing cash transport.

A cash transport method according to one aspect of the present disclosure is performed by a management apparatus to optimize a quantity of cash currently stored in a cash handling apparatus. The cash transport method includes: determining whether cash transport for the cash handling apparatus is necessary; determining details of the cash transport including a denomination and a quantity of cash to be transported by the cash transport for the cash handling apparatus; acquiring, from each of a plurality of moving objects performing cash transport, position information and information on details of cash transport that can be handled by the moving object; and selecting, from among the plurality of moving objects, a moving object to head to an installation place of the cash handling apparatus to perform the cash transport, based on the installation place of the cash handling apparatus, the details of cash transport required for the cash handling apparatus, a current position of each moving object, and the details of cash transport that can be handled by each moving object. The cash handling apparatus may be configured to store cash therein and dispense the cash therefrom in response to receiving instructions. The moving object may be an automobile, a motorcycle, a bicycle, or a person that carries cash for the cash transport.

In the above configuration, the details of cash transport may include a type and a number of cash containers to be detachably mounted to the cash handling apparatus and used for cash replenishment or cash collection, and a storage state of cash required for each cash container.

In the above configuration, the selected moving object from among the plurality of moving objects may be a moving object closest to the installation place of the cash handling apparatus.

In the above configuration, the selected moving object from among the plurality of moving objects may be a moving object that can arrive earliest at the installation place of the cash handling apparatus.

In the above configuration, the determining whether the cash transport for the cash handling apparatus is necessary may include predicting a time when at least one of cash replenishment and cash collection becomes necessary for the cash handling apparatus, and the selected moving object from among the plurality of moving objects may be a moving object that can arrive at a time closest to the predicted time. The selected moving object may be a moving object that arrives at the installation place of the cash handling apparatus after the predicted time.

In the above configuration, the method may further include notifying a communication terminal used by the selected moving object, of at least one of: information on a route from the current position of the selected moving object to an installation place of the cash handling apparatus; information on an arrival time at the installation place when the selected moving object travels along the route; information on a time when cash replenishment and/or cash collection becomes necessary for the cash handling apparatus; and information on transition of the quantity of cash stored in the cash handling apparatus.

In the above configuration, the selection of the moving object may be performed by using a machine learning model that has been trained by using accumulated information on cash transport operations performed in the past.

In the above configuration, information used for the machine learning may include information on at least one of: types and/or locations of stores where the cash transport operations were performed; transition of inventory quantity of cash in each cash handling apparatus subjected to the cash transport operations; types of moving objects performed the cash transport operations; travel routes of the moving objects; traffic jams that occurred along the travel routes; date and time when each moving object was instructed to perform the cash transport; date and time when the moving object arrived at the installation place of the cash handling apparatus; construction work and/or events carried out along at least one of the travel route, at the installation place of the cash handling apparatus, and in its vicinity; and weather and/or temperature at the time of cash transport.

In the above configuration, the determining whether the cash transport for the cash handling apparatus is necessary may be determined by using the machine learning model.

A cash transport system according to one aspect of the present disclosure is a system for optimizing a quantity of cash currently stored in a cash handling apparatus. The system includes: a communication unit configured to acquire, from each of a plurality of moving objects performing cash transport, position information and information on details of cash transport that can be performed by the moving object; and a control circuitry configured to, when the cash transport for the cash handling apparatus is necessary, determine details of the cash transport including a denomination and a quantity of cash to be transported by the cash transport, and select, from among the plurality of moving objects, a moving object to head to an installation place of the cash handling apparatus to perform the cash transport, based on the details of cash transport, the installation place of the cash handling apparatus, a current position of each moving object, and details of cash transport that can be handled by each moving object.

The cash transport method and/or the cash transport system according to the present disclosure may be realized by using a non-transitory computer-readable medium. The non-transitory computer-readable medium according to one embodiment of the present disclosure stores instructions that, when executed by a computer, cause the computer to perform: determining whether cash transport for the cash handling apparatus is necessary; determining details of the cash transport including a denomination and a quantity of cash to be transported by the cash transport for the cash handling apparatus; acquiring, from each of a plurality of moving objects performing cash transport, position information and information on details of cash transport that can be handled by the moving object; and selecting, from among the plurality of moving objects, a moving object to head to an installation place of the cash handling apparatus to perform the cash transport, based on the installation place of the cash handling apparatus, the details of cash transport required for the cash handling apparatus, a current position of each moving object, and the details of cash transport that can be handled by each moving object.

### BRIEF DESCRIPTION OF THE DRAWINGS

FIG. 1 is a schematic diagram illustrating an outline of a cash transport method and a cash transport system according to an embodiment of the present disclosure;
FIG. 2 is a block diagram showing an example of a configuration of a cash transport system;
FIG. 3 is a flowchart showing an example of a process flow regarding a cash transport request performed by a management apparatus;
FIG. 4 shows an example of a screen of a communication terminal on which supplementary information related to cash transport is displayed;
FIGS. 5A and 5B each show another example of a screen on which supplementary information related to cash transport is displayed; and
FIG. 6 illustrates machine learning performed by a management apparatus.

### DESCRIPTION OF EMBODIMENTS

Hereinafter, a cash transport method and a cash transport system according to the present disclosure will be described with reference to the accompanying drawings. According to the cash transport method and the cash transport system according to the present disclosure, when cash transport is required to replenish a cash handling apparatus with cash and/or collect cash from a cash handling apparatus, a cash-in-transit vehicle that performs the cash transport is selected from among a plurality of cash-in-transit vehicles so that the cash transport can be efficiently performed.

Specifically, it is determined whether or not cash replenishment and/or cash collection is necessary for each denomination of cash currently stored in a cash handling apparatus. If there is any denomination for which replenishment or collection is necessary, cash transport is carried out for cash of this denomination. The denominations of cash to be handled for cash transport in the cash transport method and the cash handling system according to the present embodiment are not particularly limited. The cash to be handled may be banknotes, coins, or both coins and banknotes. In the following description, the term "cash" may be used without specifying its denomination. The term "cash" in the following description may be used when its denomination is not particularly limited, and refer to banknotes and/or coins.

### [Outline of cash transport system]

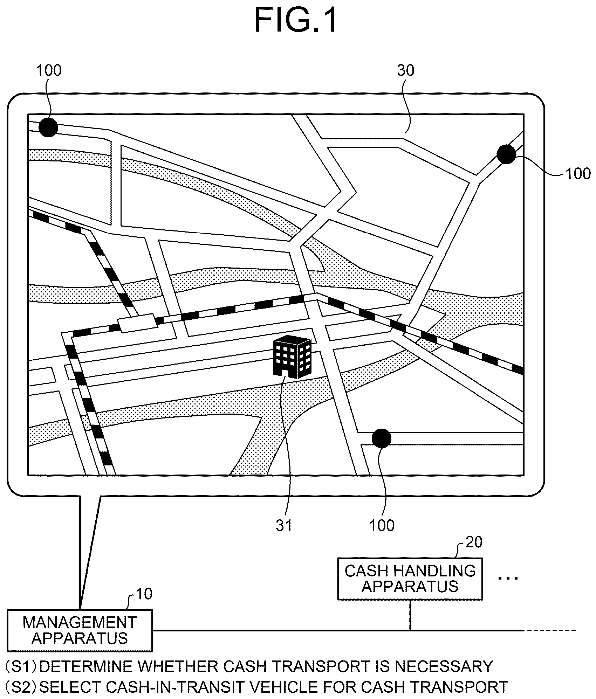

FIG. 1 is a schematic diagram illustrating an outline of a cash transport method and a cash transport system according to the present embodiment. The cash transport system includes a cash handling apparatus 20, and a management apparatus 10 that manages an inventory quantity of cash stored in the cash handling apparatus 20. The management apparatus 10 may manage the cash inventory quantity for each of a plurality of cash handling apparatuses 20.

The management apparatus 10 determines whether cash transport is necessary, based on the inventory quantity of cash in the cash handling apparatus 20 (S1). The management apparatus 10 determines that cash transport for replenishing the cash handling apparatus 20 with cash is necessary when the quantity of cash currently stored in the cash handling apparatus 20 decreases and reaches a preset threshold quantity for replenishment. The management apparatus 10 determines that cash transport for collecting cash from the cash handling apparatus 20 is necessary when the quantity of cash currently stored in the cash handling apparatus 20 increases and reaches a preset threshold quantity for collection.

The management apparatus 10 having determined that cash transport is necessary selects a cash-in-transit vehicle 100 for the cash transport from among a plurality of cash-in-transit vehicles 100 (S2). A cash-in-transit vehicle 100 is an example of a moving object that can move to a location where the cash handling apparatus 20 is installed and can transport cash for the cash handling apparatus 20. The type of the moving object is not particularly limited. For example, the moving object may be a vehicle other than an automobile, such as a two-wheeled vehicle, or may be a pedestrian who manually transports cash. The description will be continued for the case where the moving object is the cash-in-transit vehicle 100.

As shown in FIG. 1, the management apparatus 10 specifies cash-in-transit vehicles 100 present inside a predetermined target area 30 including a store 31 where the cash handling apparatus 20 is installed. The target area 30 is set in advance. For example, an area within a range of a distance shorter than the distance from the store 31 to a cash center used as a base for cash transport by the cash-in-transit vehicles 100 is set as the target area 30. The management apparatus 10 may acquire information on the current position of each cash-in-transit vehicle 100 from the cash-in-transit vehicle 100, or from a server of a cash-in-transit company that manages each cash-in-transit vehicle 100.

For example, if the straight-line distance from the store 31 to the cash center is 20 km, any area within a radius less than 20 km from the store 31, such as an area within a radius of 15 km, may be set as the target area 30. Alternatively, the target area 30 may be set such that travel distance from the store 31 is within a predetermined distance, or travel time to the store 31 is within a predetermined time. If there is no cash-in-transit vehicle 100 within the target area 30, the management apparatus 10 does not perform selection of a cash-in-transit vehicle 100, and instead, performs a process for requesting the cash-in-transit company to dispatch a cash-in-transit vehicle 100 from the cash center to the store 31.

If there is a plurality of cash-in-transit vehicles 100 in the target area 30, the management apparatus 10 selects a cash-in-transit vehicle 100 that is closest to the cash handling apparatus 20, i.e., the store 31, from among the plurality of cash-in-transit vehicles 100, to request cash transport to the store 31. For example, the management apparatus 10 compares the traveling distances from the current positions of the respective cash-in-transit vehicles 100 to the store 31, and selects a cash-in-transit vehicle 100 having the shortest traveling distance.

The management apparatus 10 may select a cash-in-transit vehicle 100 that will arrive at the cash handling apparatus 20, i.e., the store 31, earliest from among the plurality of cash-in-transit vehicles 100 in the target area 30, to request the cash transport. In this case, the management apparatus 10 may compare scheduled arrival times at the store 31 for the respective cash-in-transit vehicles 100 when they are dispatched to the store 31 from their current positions, and select a cash-in-transit vehicle 100 that arrives at the store 31 earliest. The scheduled time may be an estimated time obtained by calculating the time it would take if each cash-in-transit vehicle travels to the store 31 from its current position. A method to obtain the traveling distance and the scheduled arrival time from each cash-in-transit vehicle 100 to the money handling apparatus 20 or the store 31 is not particularly limited and may be performed according to a conventionally known method.

The management apparatus 10 may predict the time when cash replenishment and/or cash collection will be required at the cash handling apparatus 20 and, based on the predicted time, select one cash-in-transit vehicle 100 from among the plurality of cash-in-transit vehicles 100 in the target area 30 to request cash transport.

For example, a replenishment threshold and a collection threshold are set in advance so that cash replenishment and cash collection are required after a predetermined time has elapsed from the time at which the quantity of cash in the money handling apparatus 20 reaches these thresholds. Based on this setting, when the quantity of cash currently stored in the cash handling apparatus 20 reaches the replenishment threshold or the collection threshold, the management apparatus 10 can predict that cash replenishment or cash collection will be required at the cash handling apparatus 20 after the predetermined time. The thresholds may be set based on data on cash handling operations performed in the cash handling apparatus 20 in the past, and/or data on transition of cash inventory in the cash handling apparatus 20 in the past.

For example, if a replenishment threshold is set such that cash replenishment will be required 15 minutes later, the management apparatus 10 detects the time at which the quantity of cash currently stored in the cash handling apparatus 20 reaches this threshold, and sets the time 15 minutes after that detected time as the predicted time at which cash replenishment will be required at the cash handling apparatus 20. Likewise, if a collection threshold is set such that cash collection will be required 15 minutes later, the management apparatus 10 sets the time 15 minutes after the time at which the quantity of cash currently stored in the cash handling apparatus 20 reaches this threshold, as the predicted time at which cash collection will be required at the cash handling apparatus 20.

The management apparatus 10 may predict the time when cash replenishment or cash collection will be required, based on the current cash inventory and data on past cash handling performed in the cash handling apparatus 20 and/or data on past transition of cash inventory in the cash handling apparatus 20. That is, the time may be predicted directly based on the data on past cash handling, rather than by using the thresholds obtained using the data.

Even when predicting the time when cash replenishment or cash collection will be required at the cash handling apparatus 20, the management apparatus 10 may select a cash-in-transit vehicle 100 closest to the store 31 or a cash-in-transit vehicle 100 that can arrive at the store 31 earliest from among the cash-in-transit vehicles 100 present in the target area 30.

Alternatively, the management apparatus 10 may select a cash-in-transit vehicle 100, based on a predicted time. For example, the management apparatus 10 selects a cash-in-transit vehicle 100 that will arrive at the store 31 at the time that is closest to, but not later than, the predicted time. In this case where the time at which cash replenishment or cash collection will be required at the store 31 is predicted and a cash-in-transit vehicle 100 that will arrive at the time closest to the predicted time is selected, the cash-in-transit vehicle 100 closest to the store 31 and the cash-in-transit vehicle 100 that can arrive at the store 31 earliest may not necessarily be selected.

For example, it is assumed that the current time is 10:40 a.m., and the management apparatus 10 predicts that cash replenishment for the cash handling apparatus 20 or cash collection from the cash handling apparatus 20 will be required at 11:00 a.m. In this case, the management apparatus 10 selects a cash-in-transit vehicle 100 whose scheduled arrival time (estimated arrival time) at the store 31 is earlier than 11:00 a.m. and closest to 11:00 a.m. For example, if the scheduled arrival times of three cash-in-transit vehicles 100 are 10:45 a.m., 10:50 a.m., and 11:05 a.m., respectively, the management apparatus 10 selects the cash-in-transit vehicle 100 with the scheduled arrival time of 10:50 a.m., rather than the one that can arrive at the earliest time, 10:45 a.m.

The management apparatus 10 may select a cash-in-transit vehicle 100 that will arrive at the store 31 at the time closest to the predicted time, within a range where the elapsed time from the predicted time does not exceed a preset allowable time. For example, if it is intended to allow that arrival of the cash-in-transit vehicle 100 is 10 minutes after the predicted time, the allowable time is set to 10 minutes. That is, if it is acceptable for the cash-in-transit vehicle 100 to arrive at the store 31 within 10 minutes after the predicted time, the allowable time is set to 10 minutes.

In this case of the above example in which the predicted time is 11:00 a.m. and the scheduled arrival times of the three cash-in-transit vehicles 100 are 10:45 a.m., 10:50 a.m., and 11:05 a.m., respectively, the management apparatus 10 selects the cash-in-transit vehicle 100 with the scheduled arrival time of 11:05 a.m., which is later than the predicted time of 11:00 a.m. but is within 10 minutes (allowable time) after the predicted time and is closest to the predicted time.

The management apparatus 10 selects a cash-in-transit vehicle 100 based not only on the position information of each cash-in-transit vehicle 100 but also on whether the cash-in-transit vehicle 100 is able to perform the cash transport. The management apparatus 10 acquires information on each cash-in-transit vehicle 100, from the cash-in-transit vehicle 100 or the server of the cash-in-transit company that manages each cash-in-transit vehicle 100, and uses the acquired information for selecting a cash-in-transit vehicle 100.

For example, when collecting cash from the cash handling apparatus 20 to the cash-in-transit vehicle 100, the management apparatus 10 excludes, from the selection targets, any cash-in-transit vehicle 100 that cannot handle the cash collection because its secure compartment for loading cash to be transported is full.

Some cash handling apparatuses 20 are configured to use detachable cash containers, such as cassettes and bags, for storing cash to be transported. The cash collection work for such apparatuses includes: removing a cash container, in which cash to be collected is stored, from the cash handling apparatus 20, and collecting the container together with the cash therein; and attaching an empty cash container to the cash handling apparatus 20 in place of the collected cash container.

In this case, the management apparatus 10 excludes, from the selection targets, any cash-in-transit vehicle 100 that cannot load the cash container collected from the cash handling apparatus 20. Additionally, the management apparatus 10 excludes any cash-in-transit vehicle 100 that is not carrying an empty cash container to be attached to the cash handling apparatus 20 in place of the collected cash container. For example, when two cash containers need to be collected from the cash handling apparatus 20; any cash-in-transit vehicle 100 that cannot prepare two or more empty cash containers is excluded from the selection targets. If the cash handling apparatus 20 uses a bag-type cash container, any cash-in-transit vehicle 100 that can prepare only a cassette-type cash container is excluded from the selection targets.

When replenishing the cash handling apparatus 20 with cash, the management apparatus 10 excludes, from the selection targets, any cash-in-transit vehicle 100 that cannot prepare a required quantity of cash of a denomination required for replenishment.

If the cash handling apparatus 20 is an apparatus in which cash for replenishment is fed out from a cash container detachably mounted thereto and supplied to a cash storage unit inside the apparatus, any cash-in-transit vehicle 100 that cannot prepare a cash container in which a required quantity or more of cash of a denomination required for replenishment is stored, is excluded from the selection targets. Even if a cash container storing a sufficient amount of cash for the replenishment is in the secure compartment of the cash-in-transit vehicle 100, if the cash container is not of a type that can be attached to and detached from the cash handling apparatus 20, this cash-in-transit vehicle 100 is excluded from the selection targets.

The management apparatus 10 having selected a cash-in-transit vehicle 100 requests the cash-in-transit vehicle 100 to perform cash transport. For example, the management apparatus 10 transmits information on the location of the cash handling apparatus 20, i.e., the location of the store 31, to the selected cash-in-transit vehicle 100, and requests the cash-in-transit vehicle 100 to head to the store 31. For example, the management apparatus 10 may transmit request information to a communication terminal provided in the cash-in-transit vehicle 100 or a communication terminal possessed by an occupant of the cash-in-transit vehicle 100 to request cash transport.

The information to be transmitted from the management apparatus 10 to the cash-in-transit vehicle 100 may include information on denominations and the quantity for each denomination of cash required for replenishing the cash handling apparatus 20, information on denominations and the quantity for each denomination of cash to be collected from the cash handling apparatus 20, and information on the type and number of cash containers required for the cash replenishment or the cash collection.

Upon receiving the cash transport request from the management apparatus 10, the cash-in-transit vehicle 100 heads to the store 31, and cash replenishment and/or cash collection is performed for the cash handling apparatus 20. Instead of directly requesting the selected cash-in-transit vehicle 100 to perform cash transport, the management apparatus 10 may request cash transport through the cash-in-transit company that manages the cash-in-transit vehicle 100. In this case, the management apparatus 10 may request the cash-in-transit company to perform cash transport by specifying the selected cash-in-transit vehicle 100.

### [Specific example of cash transport system]

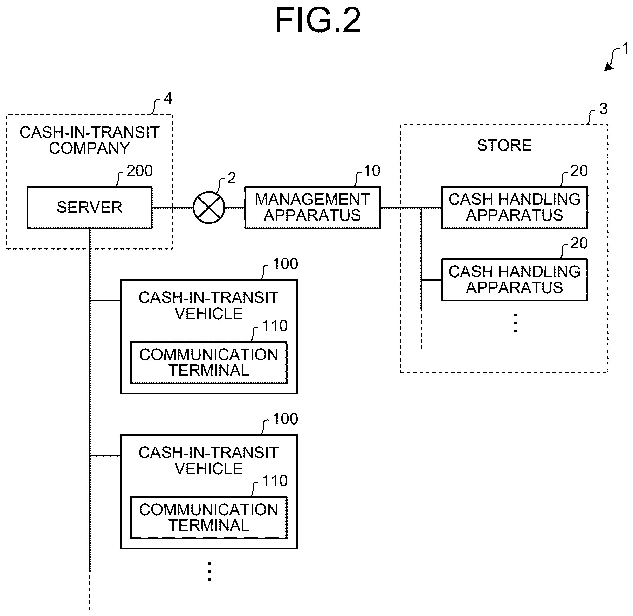

FIG. 2 is a block diagram showing a configuration example of a cash transport system 1. The cash transport system 1 includes a management apparatus 10, and one or more cash handling apparatuses 20 installed in a store 3.

The cash handling apparatus 20 is configured to perform cash handling. For example, the cash handling apparatus 20 performs at least one of: a depositing process for receiving cash from outside the apparatus and storing the cash in a storage unit provided inside the apparatus; and a dispensing process for feeding out cash from the storage unit inside the apparatus and discharging the cash to outside the apparatus.

The type of the store 3 and the type of the cash handling apparatus 20 used in the store 3 are not particularly limited. For example, the store 3 may be a store selling items to customers. In this case, the cash handling apparatus 20 may be an apparatus used at a checkout counter of the store 3 for cash settlement of transaction amounts with customers purchasing the item sold in the store 3. The cash handling apparatus 20 may be an apparatus that is installed in a back room of the store, and is used by clerks to deposit proceeds from sales and/or dispense cash for change. The cash handling apparatus 20 may be an apparatus that accepts deposit of a large amount of coins brought by a customer from home, stores the coins in the storage unit inside the apparatus, and issues a coupon that can be used to pay a transaction amount at the store 3 according to the deposited amount. The cash handling apparatus 20 may be an apparatus that accepts deposit of cash by a customer into an account at a financial institution, or an apparatus that dispenses cash withdrawn by a customer from an account at a financial institution.

The management apparatus 10 is a computer device including a control circuitry, a memory, and a communication unit, for example. A cloud server may be used as the management apparatus 10. The management apparatus 10 may be implemented through cooperation of a plurality of computer devices. The management apparatus 10 acquires, from each cash handling apparatus 20 in the store 3, inventory information on denominations and the quantity for each denomination of cash currently stored in the apparatus.

The management apparatus 10 can communicate with a server 200 used by a cash-in-transit company 4 via a public line 2 such as the Internet. The cash-in-transit company 4 manages a plurality of cash-in-transit vehicles 100 to carry out cash transport for a plurality of stores including the store 3, as well as financial institutions.

The server 200 manages information on each cash-in-transit vehicle 100. The information managed by the server 200 includes: information on the current position of the cash-in-transit vehicle 100; information on the type and number of cash containers currently loaded on the cash-in-transit vehicle 100; information on denominations and the quantity for each denomination of cash currently stored in each cash container; and information on the type and number of cash containers that can be additionally loaded on the cash-in-transit vehicle 100. The management apparatus 10 acquires the information for each cash-in-transit vehicle 100 from the server 200.

Each cash-in-transit vehicle 100 is provided with a communication terminal 110 that can communicate with the server 200. The communication terminal 110 may be a computer device including a display, an operation unit, a memory, a control circuitry, and a communication unit. For example, a smartphone or a tablet may be used as the communication terminal 110. The communication terminal 110 manages: information on the current position of the cash-in-transit vehicle 100 on which the terminal 110 is installed; information on the type and number of cash containers currently loaded on the cash-in-transit vehicle 100; information on denominations and the quantity for each denomination of cash currently stored in each cash container; and information on the type and number of cash containers that can be additionally loaded on the cash-in-transit vehicle 100. The communication terminal 110 transmits these pieces of information to the server 200, whereby the server 200 can manage the information on each cash-in-transit vehicle 100 as described above. For example, when the cash-in-transit vehicle 100 performs cash transport for a certain store and the types and quantities of cash being transported by the cash-in-transit vehicle 100 change, information on the cash is updated on the communication terminal 110. Information on the update is transmitted from the communication terminal 110 to the server 200, whereby the information on the corresponding cash-in-transit vehicle 100 managed by the server 200 is also updated.

The management apparatus 10 can transmit information to the communication terminal 110 of each cash-in-transit vehicle 100 via the server 200. For example, the management apparatus 10 designates a cash-in-transit vehicle 100, and transmits, to the server 200, information requesting cash transport for the store 3 and information necessary for the cash transport. The server 200 transmits the information necessary for the cash transport to the communication terminal 110 of the cash-in-transit vehicle 100 designated by the management apparatus 10. The communication terminal 110 displays on its screen the information received from the server 200. The cash-in-transit vehicle 100 heads to the store 3 to start cash transport based on the information displayed on the communication terminal 110. However, the communication method is an example, and the management apparatus 10 may directly communicate with the communication terminal 110 of the cash-in-transit vehicle 100 without the intervening server 200.

### [Request for cash transport]

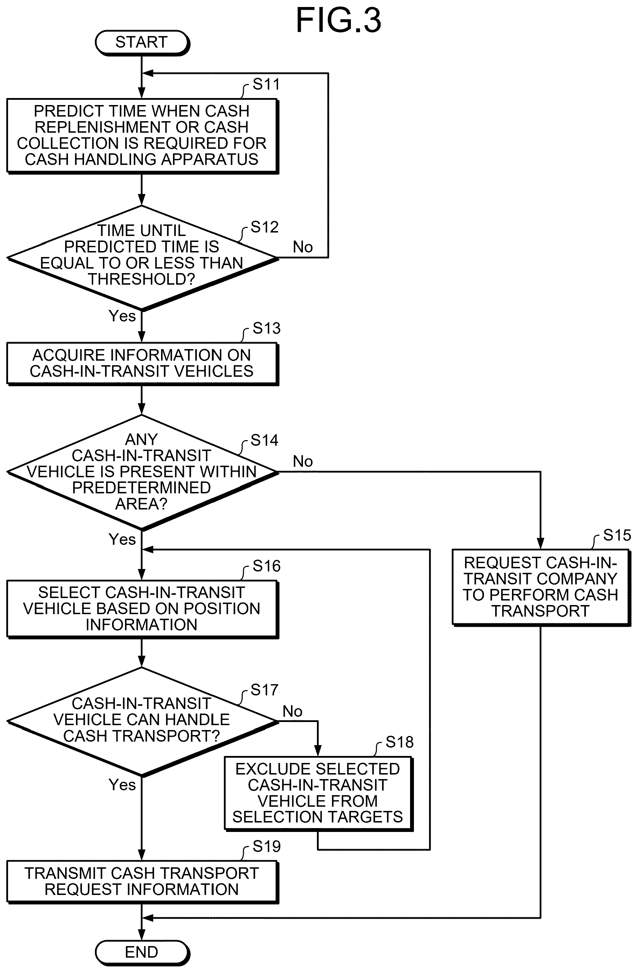

FIG. 3 is a flowchart showing an example of a process flow regarding a cash transport request performed by the management apparatus 10. The management apparatus 10 acquires inventory information of each cash handling apparatus 20 installed in the store 3, and monitors denominations and the quantity for each denomination of cash stored in the apparatus. The management apparatus 10 predicts the time when cash replenishment or cash collection will be required at the cash handling apparatus 20 (step S11). In other words, the management apparatus 10 predicts the time remaining until cash replenishment or cash collection becomes necessary for the cash handling apparatus 20.

If the remaining time until the predicted time is longer than a preset threshold (step S12; No), the management apparatus 10 continues to monitor the inventory quantity in the cash handling apparatus 20. Meanwhile, if the remaining time until the predicted time is equal to or less than the threshold (step S12; Yes), the management apparatus 10 acquires information on cash-in-transit vehicles 100 (step S13). The management apparatus 10 acquires the information from the server 200 of the cash-in-transit company 4.

The information acquired by the management apparatus 10 includes information on the current position of each of the plurality of cash-in-transit vehicles 100 managed by the cash-in-transit company 4. The information acquired by the management apparatus 10 includes information on cash replenishment or cash collection that each cash-in-transit vehicle 100 can perform when the cash-in-transit vehicle 100 heads directly from its current position to the store 3 without returning to the cash center used as the base of cash transport.

Based on the position information of each cash-in-transit vehicle 100, the management apparatus 10 determines whether any cash-in-transit vehicle 100 is present within the target area 30 (step S14). For example, the management apparatus 10 sets, as the target area 30, a range in which a straight-line distance from the store 3 is less than or equal to a preset threshold. The management apparatus 10 determines whether any cash-in-transit vehicle 100 is present within the target area 30. For example, the management apparatus 10 determines whether any cash-in-transit vehicle 100 is present within the target area 30, within which the distance from the store 3 is shorter than the distance from the store 3 to the cash center used by the cash-in-transit vehicle 100 as a base for cash transport. The target area 30 may be a circular area centered at the store 3, in which the cash handling apparatus 20 that is the target of the cash transport is installed, and having a radius shorter than the distance from the store 3 to the cash center.

If no cash-in-transit vehicle 100 is found in the target area 30 (step S14; No), the management apparatus 10 requests the cash-in-transit company 4 to perform cash transport (step S15). The management apparatus 10 transmits, to the server 200 of the cash-in-transit company 4, information on the location of the store 3, and information on cash required for replenishing the cash handling apparatus 20 or information on cash required to be collected from the cash handling apparatus 20, and requests cash transport. In this case, the cash-in-transit company 4 arranges cash transport. For example, in the cash center, a cash-in-transit vehicle 100 is prepared for replenishment of the cash handling apparatus 20 with cash or collection of cash from the cash handling apparatus 20, and this cash-in-transit vehicle 100 heads to the store 3.

When cash-in-transit vehicles 100 have been found in the target area 300 (step S14; Yes), the management apparatus 10 selects a cash-in-transit vehicle 100 to request cash transport, based on position information of each cash-in-transit vehicle 100 (step S16). The management apparatus 10 selects a cash-in-transit vehicle 100 as described with reference to FIG. 1. For example, a cash-in-transit vehicle 100 that can arrive at the store 3 at the time closest to the predicted time when cash replenishment or cash collection becomes necessary at the cash handling apparatus 20, is selected. Alternatively, a cash-in-transit vehicle 100 that can arrive at the store 3 earliest may be selected, or a cash-in-transit vehicle 100 that is present nearest to the store 3 may be selected.

The management apparatus 10 determines whether the selected cash-in-transit vehicle 100 can handle cash transport for the cash handling apparatus 20 (step S17). As described with reference to FIG. 1, the management apparatus 10 determines whether the cash-in-transit vehicle 100 can handle cash replenishment or cash collection that the cash handling apparatus 20 requires. For example, it is determined whether the cash-in-transit vehicle 100 can prepare all cash containers required by the cash handling apparatus 20. For the cash replenishment, it may be determined that the cash-in-transit vehicle 100 can perform the cash transport when the cash-in-transit vehicle 100 can prepare cash required by the cash handling apparatus 20, in a cash container to be attached to the cash handling apparatus 20. Further, the cash-in-transit vehicle 100 may be required to collect another cash container detached from the cash handling apparatus 20 instead of the attached cash container. For the cash collection, it may be determined that the cash-in-transit vehicle 100 can perform the cash transport when the cash-in-transit vehicle 100 can collect a cash container storing cash to be collected from the cash handling apparatus 20. Further, the cash-in-transit vehicle 100 may be required to have another cash container to be attached to the cash handling apparatus 20 instead of the collected cash container.

If the cash-in-transit vehicle 100 cannot handle cash transport (step S17; No), the management apparatus 10 excludes this cash-in-transit vehicle 100 from the selection targets (step S18), returns to step S16, and again performs selection based on the position information, for the remaining cash-in-transit vehicles 100.

If the cash-in-transit vehicle 100 can handle cash transport (step S17; Yes), the management apparatus 10 transmits information for requesting the selected cash-in-transit vehicle 100 to perform cash transport (step S19), and ends the process. The management apparatus 10 transmits the request information to the server 200 of the cash-in-transit company 4.

The request information transmitted from the management apparatus 10 includes information on the cash-in-transit vehicle 100 selected by the management apparatus 10. The request information includes information on the location of the store 3. The request information includes information on cash for replenishing the cash handling apparatus 20, or information on cash to be collected from the cash handling apparatus 20. The request information may include information on the type and number of cash containers required for cash replenishment or cash collection. Using the server 200, the cash-in-transit company 4 transmits, to the communication terminal 110 of the cash-in-transit vehicle 100 selected by the management apparatus 10, information on the location of the store 3, and information that instructs direct heading to the store 3 without returning to the cash center. Information on cash required for replenishing the cash handling apparatus 20 in the store 3 or cash required to be collected from the cash handling apparatus 20 in the store 3 may be transmitted from the server 200 to the communication terminal 110. Information on the type and number of cash containers required for cash replenishment or cash collection may be transmitted from the server 200 to the communication terminal 110.

The person in charge of cash transport, riding the cash-in-transit vehicle 100, can check the information received from the server 200 on the communication terminal 110, head to the store 3, and perform work for replenishing the cash handling apparatus 20 with cash or work for collecting cash from the cash handling apparatus 20.

In step S19, the management apparatus 10 may transmit the information on request for cash transport not to the server 200 but to the communication terminal 110 of the selected cash-in-transit vehicle 100. In the above example, after selecting a cash-in-transit vehicle 100 in advance based on the position information, the management apparatus 10 determines whether the cash-in-transit vehicle 100 can handle cash transport. However, after extracting cash-in-transit vehicles 100 capable of handling cash transport, the management apparatus 10 may select a cash-in-transit vehicle 100 to request for cash transport, based on position information of each cash-in-transit vehicle 100.

### [Supplemental information related to cash transport]

When requesting cash transport by the cash-in-transit vehicle 100, the management apparatus 10 may transmit supplemental information such as a route from the current position of the cash-in-transit vehicle 100 to the store 3, a scheduled arrival time at the store 3, and the like.

The management apparatus 10 transmits the supplemental information to the communication terminal 110 of the selected cash-in-transit vehicle 100 directly or via the server 200. The communication terminal 110 displays the supplemental information received from the management apparatus 10 on the display.

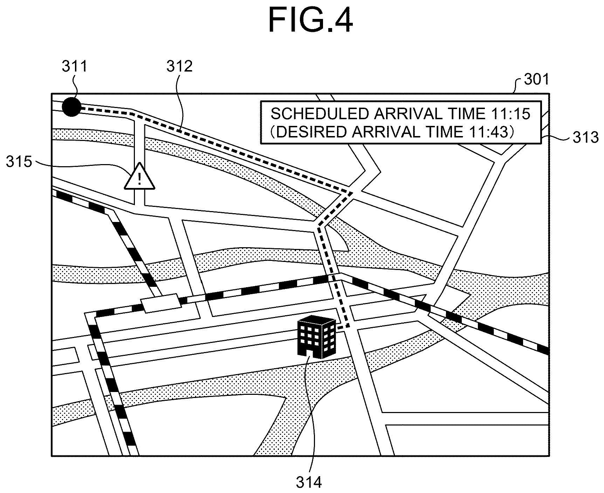

FIG. 4 shows an example of a screen of the communication terminal 110 on which supplemental information on cash transport is displayed. On a screen 301 of the communication terminal 110 shown in FIG. 4, a map including the location of the store 3 and the current position of a cash-in-transit vehicle 100 is displayed. On the map, an icon 311 indicating the current position of a cash-in-transit vehicle 100, an icon 314 indicating the location of the store 3, and a route 312 from the current position of the cash-in-transit vehicle 100 to the store 3, which are received from the management apparatus 10, are displayed.

On the screen 301, information 315 affecting selection of the route 312 may be displayed. For example, if an alternative route 312 is selected because road construction is present on the route that would usually be selected, an icon 315 indicating the road construction is displayed on the map on the screen 301. This allows the driver of the cash-in-transit vehicle 100 to understand why the route 312 different from the usual route has been selected, which is expected to help reduce the driver's stress.

On the screen 301, time information 313 on the cash transport may be displayed. The time information 313 may include the scheduled arrival time of the cash-in-transit vehicle 100 at the store 3, received from the management apparatus 10. The time information 313 may include the time, predicted by the management apparatus 10, at which cash replenishment or cash collection will be required at the cash handling apparatus 20 of the store 3. The example shown in FIG. 4 indicates that the management apparatus 10 predicts "11:43" as the time when cash replenishment or cash collection will be required at the cash handling apparatus 20, and the scheduled arrival time at the store 3 when the cash-in-transit vehicle 100 travels along the route 312 displayed on the screen 301 is "11:15". As shown in FIG. 4, the predicted time, "11:43", may be displayed as the desired arrival time for the cash-in-transit vehicle 100 at the store 3.

The driver of the cash-in-transit vehicle 100 having checked the screen 301 can confirm that he/she can arrive at the store 3 before the desired arrival time, by following the route 312 displayed on the screen 301, which is expected to help reduce the driver's stress.

If the scheduled arrival time of the cash-in-transit vehicle 100 is later than the predicted time, i.e., the desired arrival time at the store 3, the desired arrival time may not necessarily be displayed on the screen 301. For example, the management apparatus 10 may compare the desired arrival time with the scheduled arrival time, and change the information to be transmitted to the communication terminal 110 based on the comparison result, so that the desired arrival time is not displayed on the communication terminal 110.

For example, it is assumed that the time when cash replenishment or cash collection will be required at the cash handling apparatus 20 is predicted to be 11:00 a.m., that a setting is prepared in advance to allow an excess of 10 minutes from the predicted time for the scheduled arrival time, and that a cash-in-transit vehicle 100 whose scheduled arrival time is 11:05 a.m., which is the closest time to the predicted time of 11:00 a.m., is selected from among a plurality of cash-in-transit vehicles 100 in the target area 30. In this case, not the predicted time of 11:00 a.m. but 11:10 a.m. obtained by adding the allowable time to the predicted time may be displayed on the screen 301 as a desired arrival time.

Even when the scheduled arrival time is earlier than the desired arrival time, if the time from the scheduled arrival time to the desired arrival time is equal to or less than a preset threshold, the desired arrival time may not necessarily be displayed. For example, if the threshold is set to 5 minutes and the desired arrival time is 11:00 a.m., it is expected to reduce driver stress by not displaying the desired arrival time on the screen 301 when the scheduled arrival time is 10:55 a.m. or later.

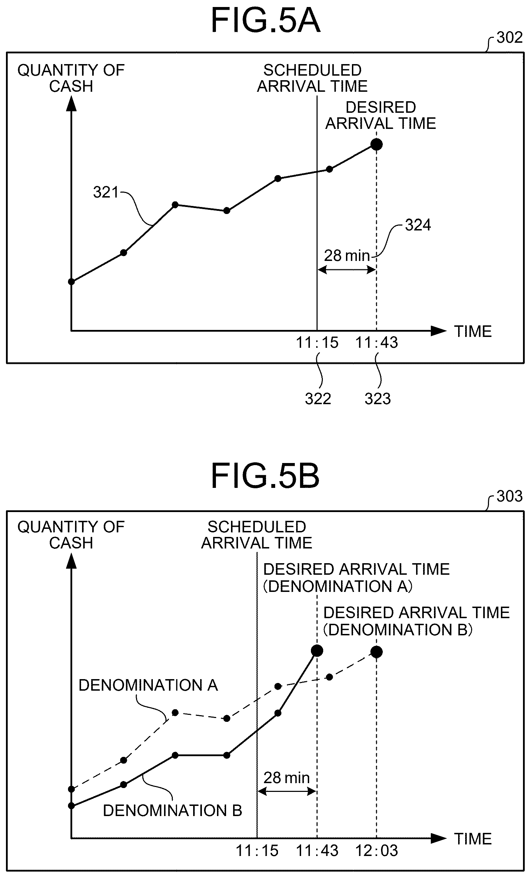

FIGS. 5A and 5B each show an example of another screen of the communication terminal 110 on which supplemental information is displayed. FIG. 5A shows a graph 321 that predicts transition of the quantity of cash of a denomination as a cash transport target in the cash handling apparatus 20. The graph 321 may be predicted and generated by the management apparatus 10 from data on past transition of cash inventory in the cash handling apparatus 20, for example.

There are cases where cash transport is performed to replenish the cash handling apparatus 20 with cash and where cash transport is performed to collect cash from the cash handling apparatus 20. FIG. 5A shows an example of a screen in the case where cash is collected.

In FIGS. 5A and 5B, the vertical axis indicates cash quantity, but the vertical axis may indicate the ratio of the cash quantity at each time to a cash quantity that requires cash collection from the cash handling apparatus 20. Specifically, the graph 321 may indicate the percentage of the cash quantity at each time, taking 100% as the cash quantity that requires cash collection from the cash handling apparatus 20.

In the example shown in FIG. 5A, in addition to the graph 321 with the horizontal axis indicating time and the vertical axis indicating cash quantity, scheduled arrival time 322 and desired arrival time 323 described in FIG. 4 are displayed on the screen 302. Furthermore, time 324 from the scheduled arrival time to the desired arrival time is displayed on the screen 302. The driver of the cash-in-transit vehicle 100 having checked the screen 302 can confirm that he/she will arrive at the store 3 28 minutes before the desired arrival time, thereby expecting an effect of reducing driver stress.

FIG. 5A shows the case of collecting a single denomination of cash from the cash handling apparatus 20 in the store 3. When a plurality of denominations of cash are to be collected, graphs for the respective denominations may be displayed as the screen 303 shown in FIG. 5B. In the example shown in FIG. 5B, the desired arrival time, i.e., the time at which the cash quantity reaches the level requiring cash collection, is displayed for each denomination. Alternatively, only the earliest time among the desired arrival times for the respective denominations may be displayed on the screen 303.

Although FIGS. 5A and 5B each show an example of cash transport for cash collection, in the case of cash transport for cash replenishment as well, transition of cash inventory in the cash handling apparatus 20 may be displayed by using a graph, and the time at which the cash quantity reaches the level requiring cash replenishment may be displayed as the desired arrival time of the cash-in-transit vehicle 100.

In the above example, the communication terminal 110 displays only one of the screen shown in FIG. 4 and the screen shown in FIGS. 5A and 5B, but may display both pieces of information.

### [Machine learning]

In the present embodiment, the management apparatus 10 selects a cash-in-transit vehicle 100, based on information on the cash handling apparatus 20 and information on the cash-in-transit vehicle 100. Alternatively, the management apparatus 10 may perform machine learning using a database in which information on cash transport operations actually performed in the past is stored, and may select a cash-in-transit vehicle 100, based on the result of the machine learning.

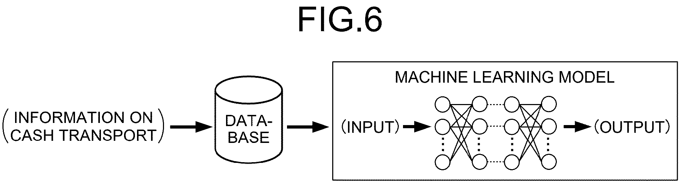

As shown in FIG. 6, the management apparatus 10 may store information on the past cash transport in the database, generate a machine learning model using the database as training data, and select a cash-in-transit vehicle 100 using the machine learning model. Machine learning may be performed using technologies such as neural network and deep learning, which are conventionally known in the field of AI (artificial intelligence).

Examples of various kinds of information to be stored in the database for the machine learning include: the type and location of a store where cash transport was performed; transition of cash inventory of the cash handling apparatus 20 subjected to cash transport; the type of the cash-in-transit vehicle 100; the gender, age, and years of cash transport experience, of the driver of the cash-in-transit vehicle 100; cash transport route, the date and time when the cash-in-transit vehicle 100 was selected, and the date and time when the cash-in-transit vehicle 100 arrived at the store; construction work or event carried out along the cash transport route, at the store, or in its vicinity; traffic jams that occurred along or near the cash transport route; and the weather and temperature at the time of cash transport. By performing machine learning using the database, it can be expected that the management apparatus 10 selects an optimum cash-in-transit vehicle 100.

Each of the apparatuses such as the management apparatus 10, the server 200, and the communication terminal 110 described in the present embodiment includes a control circuitry and a memory, and the functions and operations of each apparatus described above are realized through control performed by the control circuitry. For example, a program corresponding to the control circuitry is stored in advance in the memory or a dedicated storage device, and this program being executed by hardware such as a CPU realizes the function and operation of the control circuitry. In addition, the function and operation of the apparatus are realized by the control circuitry performing control based on information input and output using the operation unit and the display, information transmitted and received via the communication unit, information stored in the memory, and the like.

The functions and operations realized by the components described in the present embodiment may be realized by circuits or processing circuits, programmed to realize the functions and operations, including general-purpose processors, application specific processors, integrated circuits, ASICs (Application Specific Integrated Circuits), CPUs (Central Processing Units), conventional type circuits, and/or a combination of these. The processor is regarded as a circuit or a processing circuit including a transistor and another circuit. The processor may be a processor that executes a program stored in a memory. The components described in the present embodiment are hardware that is programmed or configured to realize the described functions. The hardware may be the hardware described in the present embodiment, hardware that is programmed to realize the described functions, or hardware that is known to execute the described functions. When the hardware is a processor regarded as an example of a circuit, the components described in the present embodiment may be a combination of the hardware and software that is used by the hardware and/or the processor.

According to the cash transport method and the cash transport system of the present disclosure, cash transport for a cash handling apparatus can be efficiently performed.

The configuration of the cash transport system described in the present embodiment is conceptually functional, and the configuration may not necessarily be physically limited thereto. Distributed or integrated forms of each apparatus are not limited to the above-described forms, and all or some of the forms may be distributed or integrated functionally or physically in any unit depending on various loads, use statuses, or the like.

As described above, although the embodiment of the cash transport system according to the present disclosure has been described with reference to the drawings, the configurations and operations of the cash transport system and each apparatus constituting the cash transport system are not limited to the above embodiment, and may be carried out with various improvements, alterations, and modifications, based on the knowledge of those skilled in the art without departing from the spirit thereof.

## Claims

1. A cash transport method performed by a management apparatus (10) to optimize a quantity of cash stored in a cash handling apparatus (20), the method comprising:
determining whether cash transport for the cash handling apparatus (20) is necessary;
determining details of the cash transport including a denomination and a quantity of cash to be transported by the cash transport for the cash handling apparatus (20);
acquiring, from each of a plurality of moving objects (100) performing cash transport, position information and information on details of cash transport that can be handled by the moving object (100); and
selecting, from among the plurality of moving objects (100), a moving object (100) to head to an installation place of the cash handling apparatus (20) to perform the cash transport, based on the installation place of the cash handling apparatus (20), the details of cash transport required for the cash handling apparatus (20), a current position of each moving object (100), and the details of cash transport that can be handled by each moving object (100).

2. The cash transport method according to claim 1, wherein
the details of cash transport include a type and a number of cash containers to be detachably mounted to the cash handling apparatus (20) for cash replenishment or cash collection, and a storage state of cash required for each cash container.

3. The cash transport method according to claim 1, wherein
the selected moving object (100) from among the plurality of moving objects (100) is a moving object (100) closest to the installation place of the cash handling apparatus (20).

4. The cash transport method according to claim 1, wherein
the selected moving object (100) from among the plurality of moving objects (100) is a moving object (100) that can arrive earliest at the installation place of the cash handling apparatus (20).

5. The cash transport method according to claim 1, wherein
the determining whether the cash transport for the cash handling apparatus (20) is necessary includes predicting a time when cash replenishment and/or cash collection becomes necessary for the cash handling apparatus (20), and
the selected moving object (100) from among the plurality of moving objects (100) is a moving object (100) that can arrive at a time closest to the predicted time.

6. The cash transport method according to claim 1, further comprising
notifying a communication terminal used by the selected moving object (100) of at least one of: information on a route from the current position of the selected moving object (100) to an installation place of the cash handling apparatus (20); information on an arrival time at the installation place when the selected moving object (100) travels along the route; information on a time when cash replenishment and/or cash collection becomes necessary for the cash handling apparatus (20); and information on transition of the quantity of cash stored in the cash handling apparatus (20).

7. The cash transport method according to claim 1, wherein
the selecting of the moving object (100) is performed by using a machine learning model that has been trained based on accumulated information on cash transport operations performed in the past.

8. The cash transport method according to claim 7, wherein
information used for the machine learning includes information on at least one of: types and/or locations of stores subjected to the cash transport operations; transition of inventory quantity of cash in each cash handling apparatus (20) subjected to the cash transport operations; types of moving objects (100) performed the cash transport operations; travel routes of the moving objects (100); traffic jams occurred along the travel routes; date and time when each moving object (100) was instructed to perform the cash transport; date and time when the moving object (100) arrived at the installation place of the cash handling apparatus (20); construction work and/or events carried out along at least one of the travel route, at the installation place of the cash handling apparatus (20), and in its vicinity; and weather and/or temperature at the time of cash transport.

9. The cash transport method according to claim 7, wherein
the determining whether the cash transport for the cash handling apparatus (20) is necessary is performed by using the machine learning model.

10. A cash transport system for optimizing a quantity of cash stored in a cash handling apparatus (20) comprising:
a communication unit configured to acquire, from each of a plurality of moving objects (100) performing cash transport, position information and information on details of cash transport that can be performed by the moving object (100); and
a control circuitry configured to, when the cash transport for the cash handling apparatus (20) is necessary, determine details of the cash transport including a denomination and a quantity of cash to be transported by the cash transport, and select, from among the plurality of moving objects (100), a moving object (100) to head to an installation place of the cash handling apparatus (20) to perform the cash transport, based on the details of cash transport, the installation place of the cash handling apparatus (20), a current position of each moving object (100), and details of cash transport that can be handled by each moving object (100).

11. A non-transitory computer-readable medium storing instructions that, when executed by a computer, cause the computer to perform:
determining whether cash transport for the cash handling apparatus (20) is necessary;
determining details of the cash transport including a denomination and a quantity of cash to be transported by the cash transport for the cash handling apparatus (20);
acquiring, from each of a plurality of moving objects (100) performing cash transport, position information and information on details of cash transport that can be handled by the moving object (100); and
selecting, from among the plurality of moving objects (100), a moving object (100) to head to an installation place of the cash handling apparatus (20) to perform the cash transport, based on the installation place of the cash handling apparatus (20), the details of cash transport required for the cash handling apparatus (20), a current position of each moving object (100), and the details of cash transport that can be handled by each moving object (100).
